# EUROPÄISCHE PATENTSCHRIFT

(11) **EP 3 093 201 B1**
(45) Veröffentlichungstag und Bekanntmachung des Hinweises auf die Patenterteilung: **14.03.2018**
(21) Anmeldenummer: 16000995.7
(22) Anmeldetag: 03.05.2016
(51) Int. Cl.: B60R 22/03, B60R 22/20, B60R 22/18

(54) **GURTSCHLOSSBRINGER**
BELT BUCKLE ATTACHMENT
APPROCHE- ELEMENT DE CEINTURE

(30) Priorität: 11.05.2015 DE 102015006118
(43) Veröffentlichungstag der Anmeldung: 16.11.2016
(73) Patentinhaber: Oechsler AG, 91522 Ansbach (DE)
(72) Erfinder: Krauss, Norbert, 91522 Ansbach (DE); Wolf, Martin, 91522 Ansbach (DE); Schmidt, Winfried, 91717 Wassertrüdingen (DE); Näpfel, Matthias, 90592 Schwarzenbruck (DE)
(74) Vertreter: Führing, Dieter

(56) Entgegenhaltungen:
- DE-A1-102011 008 775
- DE-A1-102012 016 211
- DE-A1-102012 017 979

## Beschreibung

Die Erfindung betrifft einen so genannten Gurtschlossbringer gemäß dem jeweiligen Oberbegriff der beiden unabhängigen Patentansprüche.

Bei dem aus der DE 10 2012 016 211 A1 bekannten Gurtschlossbringer, gemäß dem Oberbegriff des Patentanspruchs 1, ist das Gurtschloss am Ende einer Spindel angeordnet, die mittels einer Spindelmutter höhenverfahrbar ist. Der dafür erforderliche Motor ist abseits des Gurtschlossbringers installiert und über eine flexible Welle mit dem Spindelantrieb wirkverbunden. Der Wirkungsgrad einer derartigen Anordnung lässt aber sehr zu wünschen übrig, und der Gesamtraumbedarf für die Installation der voneinander abgelegenen Aggregate ist beträchtlich.

Auch für den Gurtschlossbringer nach der DE 10 2011 008 775 A1 werden getrennte Einbauräume für ein Hebegetriebe und für dessen über eine externe Welle angekoppelten motorischen Antrieb benötigt. Hier ist, um einen Gurtschlosskopf nach Art einer Spindelmutter linear zu verschieben, die Spindel längsfest an ein Gehäuseteil angeschlossen und das Getriebe in einem weiteren Gehäuseteil untergebracht. Als Verdrehsicherung des Gurtschlosskopfes an der axial zu verfahrenden Spindelmutter ist ein Paar von stabförmigen Mitnehmern vorgesehen, die parallel zur Spindel an deren Gehäuseteil montiert sind. Um in der Bringstellung, bei längs der Spindel ausgefahrener Gurtschloss-Spindelmutter, das Einstecken der Schlosszunge zu fördern, ist die Spindelmutter in zwei Orientierungen jeweils begrenzt verschwenkbar; nämlich einerseits quer zur Spindel-Längsachse infolge Verschwenkens der beiden Gehäuseteile gegeneinander und andererseits infolge Verdrehens der Spindelmutter gegen die Rückstellkräfte der dafür biegeelastisch ausgelegten Mitnehmer.

Ein ähnlicher Gurtschlossbringer ist aus der DE 10 2013 011 025 A1 bekannt. Auch er soll insbesondere das Anlegen eines Sicherheitsgurtes auf einem Einzelsitz in einem Kraftfahrzeug dadurch erleichtern, dass das Gurtschloss vorübergehend motorisch angehoben (und anschließend wieder abgesenkt) wird; so dass das Gurtschloss etwa bei einem neben der Mittelkonsole hoch eingestellten Sitz, bei einem persönlichen Handicap oder bei Tragen eines Wintermantels leichter zu erreichen ist. Außerdem wird das Spannen des dann angelegten Gurtes durch das anschließende Absenken des Gurtschlosses gefördert.

Der neben dem Sitz für einen solchen Gurtschlossbringer verfügbare Einbauraum ist allerdings höchst beschränkt; und doch muss dessen Konstruktion die über den Gurt eingeleiteten Kräfte zuverlässig aufnehmen können, die bei harten Bremsmanövern oder gar bei einem Auffahrunfall auftreten. Dafür sind bei der vorbekannten Konstruktion des Gurtschlossbringers dessen Verzahnungseingriffe und dessen Linearführungen möglichst weit auseinander gelegen, was allerdings platzaufwändig ist und Verspannungen zwischen korrespondierenden Führungen heraufbeschwört. Eine zusätzliche aber schwer zu erfüllende Anforderung der Praxis an einen derartigen Gurtschlossbringer besteht noch darin, dass sich etwaige Geräuschemissionen beim Aus- und Einfahren des Gurtschlosses sowie während des Fahrbetriebes insbesondere in Premiumfahrzeugen verbieten; was von metallenen Eingriffspaarungen zu Kunststoffverzahnungen und allgemein zu Kunststoffkomponenten für Antriebs- und Führungsfunktionen führen würde, die aber schwerlich den Crashlastvorgaben genügen können.

Angesichts solcher Anforderungen an seine hohe Leistungsdichte liegt vorliegender Erfindung die technische Problemstellung zugrunde, den elektromotorischen Gurtschlossbringer gattungsgemäßer Art funktional und konstruktiv zu optimieren.

Diese Aufgabe ist erfindungsgemäß durch die Kombination der im Hauptanspruch angegebenen wesentlichen Merkmale gelöst. Danach ist ein als solcher bekannter Linearantrieb mit einer axial verlagerbaren, hoch zug- und belastungsabhängig gegebenenfalls auch druckbelastbaren Spindel in einer von einem Getriebemotor verdrehbaren Spindelmutter für die Bewegung des Gurtschlosses vorgesehen; wobei die Spindel durch die Stützwirkung einer intern oder extern gelegenen Säule von Biegemomentenbeanspruchungen praktisch befreit ist, so dass der Gurtschlossbringer auf geräuscharme Kunststoff-Verzahnungseingriffe zwischen einem Motor-Ritzel und der Spindel optimiert werden kann, die dadurch nicht mehr als Geräuschquellen in Erscheinung treten.

Dabei sind die im Crashfall lastaufnehmenden Paarungen in Metall realisiert, nämlich insbesondere die axiale Abstützung einer metallenen Spindelmutter in einem metallenen Gehäuse und deren Verzahnungseingriff in eine metallene Spindel. Für den Normalbetrieb ist aber eine Geräuschentkopplung zwischen den Metall-Paarungen durch ein axiales Distanzstück aus Kunststoff zweckmäßig, und / oder durch einen formschlüssigen Eingriff einer Kunststoffmutter in das SpindelGewinde. Im Lastfall werden das Distanzstück beziehungsweise das Kunststoffgewinde axial gestaucht, und durch die geringe Axialverlagerung der Spindel kommt in der Spindelmutter nun ein gegenüber ihrem Kunststoffgewinde axial versetztes Metallgewinde zum Tragen.

Die an der Spindel auftretende Biegemomente aufnehmende Säule kann grundsätzlich beliebigen Voll- oder Hohl-Querschnitt aufweisen. Unrunde Querschnitte erbringen zusätzlich zur gerätefesten Längsführung eine Verdrehsicherung. Die Säule kann achsparallel neben der Spindel angeordnet und mit der Spindel fest verbunden aus- und einfahrend in einer gehäusefesten hochpräzisen Längsführung gelagert sein. Eine Verringerung des erforderlichen Querschnittes des, auch den Antriebsmotor für die Spindelbewegung aufnehmenden, Gehäuses ergibt sich, wenn die Spindel einen möglichst koaxialen, wenigstens einen achsparallelen Hohlraum aufweist, der eine gehäusefeste Säule gleicher Querschnittsgeometrie in sich aufnimmt, so das die hier oder anderweitig drehfest geführte Spindel auf der sie nun innen abstützenden Säule praktisch ohne Auftreten von Biegebeanspruchungen axial verlagerbar ist.

In jedem Fall ist durch die Säulen-Abstützung ein kompaktes, statisch bestimmtes Führungssystem erzielt, da die Spindel nun nur als Linearantrieb für das Gurtschloss mechanisch beansprucht wird, aber von Führungsfunktionen entkoppelt ist. Für die Belange der Praxis ist das besonders deshalb von Bedeutung, weil ansonsten die in der Großserienfertigung unvermeidbaren Unrundheiten und sonstigen an der Spindel auftretenden Toleranzen zu ungleichmäßigen Linearstellbewegungen führen würden.

Weitere vorteilhafte konstruktive Einzelheiten und erfinderische Weiterbildungen sowie Alternativen ergeben sich aus den weiteren Ansprüchen und, auch unter Berücksichtigung von deren Vorteilen, aus nachstehender Beschreibung von in der Zeichnung nicht ganz maßstabsgerecht vergrößert unter Beschränkung auf das Funktionswesentliche teilweise geschnitten skizzierten, konstruktiv bevorzugten Realisierungsbeispielen zur erfindungsgemäßen Lösung. In der Zeichnung zeigt
- Fig.1: einen Gurtschlossbringer mit exzentrischer Säulenführung in Ansicht gegen seinen hier zweischalig skizzierten Lagerblock bei abgenommenem Gehäusedeckel und abgenommener Oberschale sowie
- Fig.2: in schematisch skizziertem Axial-Längsschnitt eine weiterentwickelte Spindelmutter samt Spindel mit zentraler Säulenführung.

Der Gurtschlossbringer 11 weist ein aus mechanisch hochbeanspruchbarem Material wie insbesondere massivem Stahlblech geformtes flaches längliches schalenförmiges Gehäuse 12 auf, das die beim Gurtschlossbringer 11 auch noch im Crashfall auftretenden axial- und Querkräfte zuverlässig aufnehmen kann. Das Gehäuse 12 ist bei seiner unteren Gehäuse-Schmalseite 13 mit einem Anschraubauge 14 zur Montage an der Karosserie neben einem Kraftfahrzeug-Sitz (nicht dargestellt) ausgestattet. Gegenüberliegend ragt aus der abgekröpften Wand längs der oberen Schmalseite 15 des Gehäuses 12 eine metallene Haltestange 16 heraus, die an ihrem Stirnende 17 mit einer Anschraubplatte 18 für Bestückung mit einem Gurtschloss 19 versehen ist.

Der untere Bereich der Haltestange 16 geht, mehrteilig oder bevorzugt einteilig, in eine dazu koaxiale Spindel 20 über, deren Achsen in diesem Beispielsfalle durch den Mittelpunkt des Anschraubauges 14 verlaufen. Die Spindel 20 kann sich aber auch bis zur Anschraubplatte 18 erstrecken, so dass letztlich kein Unterschied zwischen Haltestange 16 und Spindel 20 gegeben ist. Deshalb wird nachstehend nur noch von der (beide Funktionen wahrnehmenden) Spindel 20 gesprochen.

In diesem Ausführungsbeispiel trägt die metallene Spindel 20 eine hoch belastbar axial abgestützte metallene Spindelmutter 21. Deren Gewindepaarung ist darauf ausgelegt, einerseits den Wirkungsgrad der Kraftübertragung zu optimieren und andererseits möglichst keine Querkraftkomponenten auf die Spindel 20 einwirken zu lassen. Das ist am ehesten bei einem Gewinde mit geringem Flankenwinkel wie im Falle eines Trapezgewindes erreichbar, weil das, im Gegensatz etwa zu Gewinden mit großen Flankenwinkeln, nicht zu radialem Auslenken der Spindel 20 infolge Selbstzentrierens in der Spindelmutter 21 neigt. Dies ist insbesondere dann wichtig, wenn die Führung der Spindel komplett statisch bestimmt ist, da sonst Verspannungen auftreten können und da sonst schon geringe Abweichungen hinsichtlich Verzahnungsgeometrie oder Lagerung der Spindel 20 beziehungsweise ihrer Mutter 21 zu Geräuschentwicklung und Leistungsminderung führen würden.

Die Spindelmutter 21 kann über ein mehrstufig drehzahluntersetzendes Getriebe, vorzugsweise ein Kunststoff-Getriebe 22, mit axialkräftefreier, deshalb geräuscharmer und auch verlustarmer Geradverzahnung von einem Motor 23 verdreht werden. Grundsätzlich ist in Rahmen vorliegender Erfindung auch eine Schrägverzahnung einsetzbar, die besonders geräuscharm aber weniger leistungsfähig ist.

Da die Spindelmutter 21 im Gehäuse 12 axial fixiert ist, bewirkt ihr motorisches Verdrehen ein Aus- beziehungsweise Einfahren der sie, im Gehäuse 12 drehfest geführt, durchsetzenden Spindel 20 und somit das gewünschte Anheben und wieder Absenken des beim Gehäuse-externen Spindel-Stirnende 17 angebrachten Gurtschlosses 19.

Beim Untersetzungsgetriebe 22 steht ein am Stirnende der Motorwelle getragenes Motorritzel 24 mit der Stirnverzahnung eines Triebrades 25 in Eingriff; und dessen Radritzel 26 greift (direkt, oder wie skizziert über wenigstens ein Zwischenrad 27) in eine Außenverzahnung 28 auf der Außenmantelfläche der Spindelmutter 21 ein, um mit deren Drehbewegung die drehfest gelagerte Spindel 20 mit dem Gurtschloss 19 linear anzutreiben. Im Interesse der Geräuschvermeidung ist diese Außen-Stirnverzahnung 28 vorzugsweise durch Umspritzen der Spindelmutter 21 in Kunststoff ausgebildet.

Im Interesse eines noch kompakteren Aufbaues kann wie skizziert vorgesehen sein, die Stirnverzahnung des Triebrades 25 nicht auf dessen Außenmantelfläche auszubilden, sondern an die Innenmantelfläche 29 eines topfförmigen Hohlrades zu verlegen, in welches das Motorritzel 24 achsparallel eingreift. Die dadurch ermöglichte größere Untersetzung der hochtourig drehenden Motorwelle liefert einen zusätzlichen Beitrag zur Geräuschreduktion bei den nachfolgenden Verzahnungseingriffen. Wenn der Durchmesser des Motorritzels 24 wie skizziert nicht kleiner als der Radius der Innenmantelfläche 29 ist, erfolgt eine einseitige, fliegende Lagerung des hohlen Triebrades 25 auf der Seite seines Radritzels 26; andernfalls kann eine durchgehende und beidseitig gelagerte Trieb-Welle 30 vorgesehen sein, die wegen präziserer Verzahnungseingriffe vorteilhafter ist.

Der Einbau des Getriebe-Motors 23 und damit auch die Lagerung seines Untersetzungsgetriebes 22, bis hin zur Axialabstützung der Spindelmutter 21, erfolgen beim skizzierten Realisierungsbeispiel in einem vorzugsweise im Kunststoff-Spritzguss ein- oder mehrteilig erstellten Lagerblock 32. Der wird formschlüssig zugverankert, nämlich abgestützt gegen Zugeinwirkung vom Gurtschloss 19 her, in das flach-schalenförmige Gehäuse 12 eingelegt, und dieses kann dann noch mittels eines z.B. einfach aufgerasteten Deckels zum Schutz gegen Umwelteinflüsse verschlossen werden.

Wenn der Lagerblock 32 mehrteilig ausgelegt, insbesondere aus zwei Halbschalen zusammengesetzt ist, werden zunächst in dessen entsprechend profilierte Unterschale 33 der Motor 23 und die räderbestückten Wellen 30/31 seines Untersetzungsgetriebes 22 sowie die mit der Spindelmutter 21 bestückte Spindel 20 eingelegt. Dann kann die entsprechend profilierte Oberschale unter Fixieren der Getriebe-Lagerstellen aufgesetzt werden, um den Lagerblock 32 zu schließen. Dabei können von der Oberschale her beispielsweise hier angeformte Pfeiler (nicht dargestellt) in das Untersetzungsgetriebe 22 eingreifen, um sicherzustellen, dass im Interesse der Geräuschvermeidung die auf definierte Verzahnungseingriffe optimierten radialen Achsabstände im Betrieb eingehalten bleiben.

Wenn dagegen der Lagerblock 32 einteilig ausgelegt ist, weist er (nicht dargestellt) zum Bestücken mit dem Untersetzungsgetriebe 22 und mit der Spindel 20 Bohrungen und Öffnungen auf, in die, zentripetal bezüglich ihrer Achsen, die Spindelmutter 21, der Motor 23 und die Getrieberäder eingeschoben werden. Letztere werden danach durch koaxiales Einführen ihrer Wellen 30, 31 endgültig positioniert. Die Spindel 20 wird durch eine Öffnung im Lagerblock 32 in die darin gelegene Spindelmutter 21 hineingeschraubt und dann extern gegen weiteres Verdrehen gesichert. In beiden Fällen wirkt der Kunststoff-Lagerblock 32 als akustische Entkopplung zwischen dem Motor 23 samt Untersetzungsgetriebe 22 einerseits und andererseits dem Gehäuse 12.

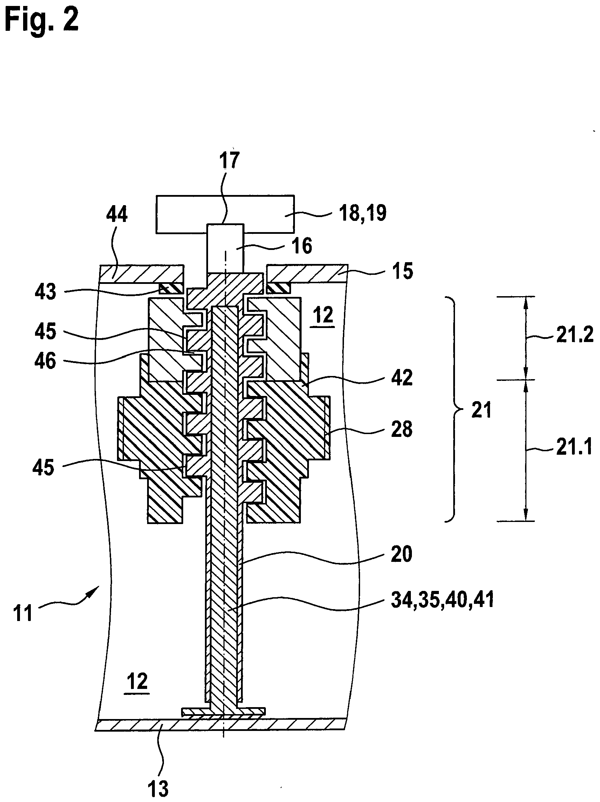

Im Rahmen vorliegender Erfindung kann der Gurtschlossbringer 11 aber grundsätzlich auch, abweichend von der skizzierten Konstruktion, ohne gesonderten Lagerblock (32) realisiert sein. Dann werden die Lagerstellen am Gehäuseboden und in wenigstens einer Wand-Abkröpfung 44 (Fig.2) an der oberen Gehäuse-schmalseite 15 bereitgestellt. Diese Gehäusewand 44 an der oberen Schmalseite 15 des Metall-Gehäuses 12 ist derart hochfest ausgelegt oder verstärkt, dass davon selbst noch im Crashfall die Zugbeanspruchung der Spindel 20 über ihre hier abgestützte Spindelmutter 21 aufgenommen wird. Zur Geräuschentkopplung im Normalbetrieb erfolgt die axiale Abstützung zweckmäßigerweise über ein komprimierbares Kunststoff-Distanzstück 43 zwischen Spindelmutter 21 und Gehäusewand.

Es stellt eine Quelle unerwünschter Geräuschentwicklung dar, wenn die konstruktiv optimierten Verzahnungseingriffe im Untersetzungsgetriebe 22 vom Motorritzel 24 bis zur Spindelmutter 21 sich betriebsbedingt, und womöglich periodisch, ändern. Das würde aber unvermeidlich eintreten, wenn Querkräfte auf die Spindel 20, und damit über deren Spindelmutter 21 auf das Untersetzungsgetriebe 22 einwirken.

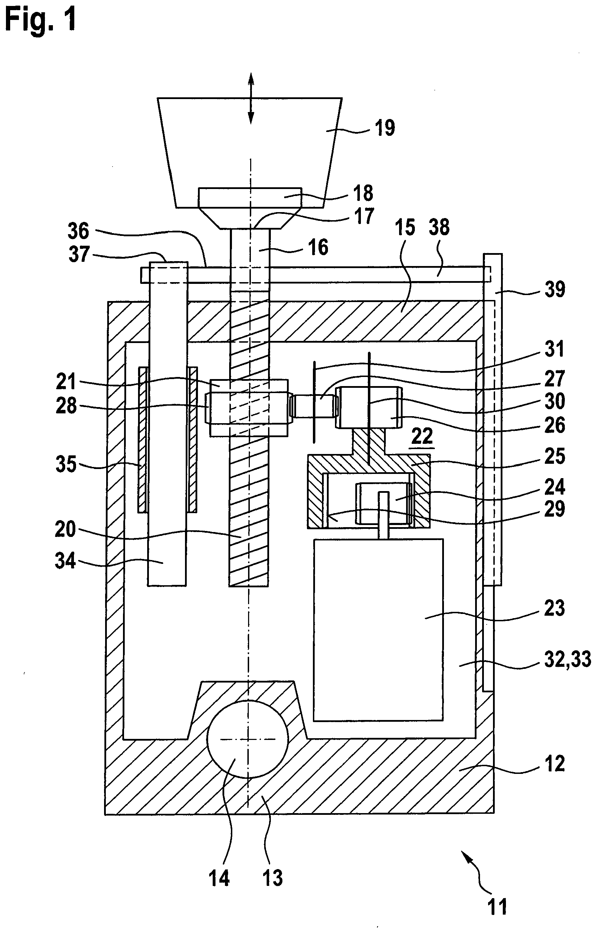

Um dem entgegenzuwirken, ist erfindungsgemäß vorgesehen, etwaige derartige Biegebeanspruchungen mittels einer hier so genannten Säule 34 abzustützen und aufzunehmen, die sich im Ausführungsbeispiel gemäß Fig.1 achsparallel gegenüber der Spindel 20 versetzt durch eine gerätefeste präzise Längsführung 35 erstreckt, welche vorzugsweise im Lagerblock 32 ausgebildet oder angeordnet ist. Deren Ausführung als Gleitlagerbuchse ist kostengünstiger, als eine Ausführung mit Kugelführung, wenn auch infolge der Gleitreibung weniger leistungsfähig hinsichtlich Bewegungen beziehungsweise Belastungen.

Ein im Bereich des, aus dem Lagerblock 32 herausgetretenen, oberen Säulenendes 37 zentrifugal sich erstreckender metallener Ausleger 36 ist gegenüberliegend, der Krafteinleitung vom Gurtschloss 19 in die Spindel 20 möglichst nahe, mit der dadurch dann unverdrehbar axial verlagerbaren metallenen Spindel 20 fest und biegesteif verbunden. Dadurch wird bei einer von der verdrehten Spindelmutter 21 hervorgerufenen Axialbewegung der Spindel 20 die Stütz-Säule 34 in ihrer Längsführung 35 im Lagerblock 32 entsprechend verschoben. Vorzugsweise wird die Spindel 20 mit dem Ausleger 36 verschweißt. Wenn auf die aus dem Lagerblock 32 und damit aus dem Gehäuse 12 unter radialem Spiel herausragende Spindel 20 eine Querkraft einwirkt, wird diese über den Ausleger 36 auf die Säule 34 übertragen und von derer axial langen, passgenauen Längsführung 35 aufgenommen - also ohne dass die Spindel 20 sich infolge einer Querbeanspruchung verbiegen würde, und dadurch ohne geräuschgenerierenden Einfluss auf die Verzahnungseingriffe des Untersetzungsgetriebes 22 sowie auch ohne Spindel-Reibung am Gehäuse 12.

Bei einer Tendenz zum Verdrehen der Säule 34 könnte über den Ausleger 36 ein Biegemoment auf die Spindel 20 ausgeübt werden. Deren Rückwirkungen auf das Untersetzungsgetriebe 22 wären wieder geräuscherzeugende Eingriffsstörungen und gegebenenfalls Berührungen längs der Spindel 20. Als Abhilfe dagegen kann eine Verdrehabstützung der, die linear bewegte Spindel 20 seitlich abstützenden, Säule 34 dadurch realisiert sein, dass Innenperipherie der Längsführung 35 und Außenperipherie der Säule 34 einander angepasst unrund ausgeführt sind. Allerdings ist leichtes relatives Verdrehspiel bei vertretbarem Fertigungsaufwand dann kaum zu vermeiden. Runde Querschnitte dagegen sind einfacher herzustellen und präziser aufeinander abzustimmen. Um dennoch auch bei rundem Säulenquerschnitt eine Verdrehsicherung für die Säule 34 zu realisieren, kann wie in Fig.1 oben rechts skizziert vorgesehen sein, den Ausleger 36 über seine Befestigung an der Spindel 20 zentrifugal hinausreichend zu einer diametral oder abgewinkelt vorkragenden Stütznase 38 zu verlängern, die mit einer U-Schiene 39 peripher starr verbunden ist. Diese ist längs des dortigen Längsrandes des Gehäuses 12 längsverschiebbar gehaltert, was das geometrisch größterreichbare Stützmoment gegen eine Biegebeanspruchung der Spindel 20 infolge Verdrehtendenz der Säule 34 erbringt. Infolge des Eingriffes des Auslegers 36 verschiebt sich mit der Axialverlagerung der Säule 34 und der Spindel 20 auch die Schiene 39, so dass die periphere Abstützung der Säule 34, und damit auch der Spindel 20, stets wirksam bleibt.

Es führt zu einem noch kleiner bauenden Gurtschlossbringer 11, wenn die, die Spindel 20 insbesondere gegen Biegebeanspruchungen abstützende, Säule 34 nicht gemäß Fig.1 längsverschiebbar außerhalb, sondern gemäß Fig.2 gerätefest innerhalb der Spindel 20 achsparallel und hier insbesondere koaxial zu ihr angeordnet ist. Die Längsführung 35 ist zwischen der Außenmantelfläche 40 der Säule 34 und der Innenmatelfläche 41 der nun rohrförmigen Spindel 20 gegeben. Bei angepasst unrunden Querschnitten dieser Mantelflächen 40/41 ist dadurch zusätzlich eine Verdrehsicherung für die Spindel 20 realisiert.

Die von der drehfest aber längsbeweglich im Gehäuse 12 gelagerten, metallenen Spindel 20 getragene Spindelmutter 21 setzt sich hier zusammen aus einer im Kunststoff-Spritzguss erstellten Triebmutter 21.1 mit ihrer Außenverzahnung 28 zwischen Lagersitzen 42 und aus einer axial sich anschließenden metallenen Stützmutter 21.2. Diese kann beim Spritzguss der Treibmutter 21.1 als Formeinlegeteil teilweise mit umspritzt worden sein; oder die beiden Teilmuttern 21.1-21.2 sind getrennt erstellt und anderweitig drehfest miteinander verbunden, etwa formschlüssig mittels achsparalleler Rippen oder Zapfen. In diesem Falle ist eine axial weichelastische Einlage zwischen den beiden Teilmuttern 21.1-21.2 zweckmäßig.

Die Stützmutter 21.2 liegt, insbesondere zur Körperschall-Entkopplung über ein relativ dünnes federelastisches Distanzstück 43, axial gegen das Innere einer verstärkten oberen Gehäusewand 44 an, die vom Stirnende 17 der Spindel 20 durchgriffen ist. Deren Gewinde 45 ist hier als Trapezgewinde mit 0°-Flankenwinkel skizziert, was radial zentrierende Beanspruchungen der Spindel 20 vermeidet und optimalen Wirkungsgrad erbringt. Die Triebmutter 21.1 steht formschlüssig und deshalb tragend mit dem Trapezgewinde in Eingriff. Die Gewindegänge in der Stützmutter 21.2 sind aber dünner ausgeführt, so dass hier währenddessen nichttragende axiale Abstände 46 in der Spindelmutter 21 zu den axial benachbarten Gewindegängen der Spindel 20 verbleiben.

Im Normalbetrieb wird die im Gehäuse 12 axial verlagerbare Spindel 20 mittels des Kunststoffgewindes der Triebmutter 21.1 an der axial starr aber verdrehbar im Gehäuse 12 gelagerten Spindelmutter 21 geräuscharm aus- und eingefahren, hier geführt durch die rückwärtig, der Anschraubplatte 18 axial gegenüber, in sie hinein ragende Stütz-Säule 34.

Im Crash-Lastfall führt der plötzliche kräftige Zug vom Sicherheitsgurt über das Gurtschloss 19 auf die Spindel 20 zu einem Komprimieren des scheibenförmigen Distanzstückes 43 zwischen der Stützmutter 21.2 und der dann diese Kräfte aufnehmenden Gehäusewand 44; sowie zu einem Verformen oder Abscheren des Gewindeeingriffes der Triebmutter 21.1 oder zu einem axialen Komprimieren der erwähnten Einlage (nicht dargestellt) zwischen den beiden Teilmuttern 21.1-21.2 - also zu einer geringen Axialverlagerung der Spindel 20 bis zum Abbau des axialen Gewindeabstandes 46 in der Stützmutter 21.2. Nun tragen statt des Kunststoffgewindes die, regulär nicht-tragenden und deshalb geräuschfreien, metallenen Gewindegänge über die Axialerstreckung der gegen die Gehäusewand 44 anliegenden Stützmutter 21.2.

Bei einem statisch bestimmten elektromotorischen Linearantrieb mit von einer Spindelmutter 21 axial verlagerbarer Spindel 20 für einen Gurtschlossbringer 11 werden somit insbesondere geräuscherzeugende Eingriffsschwankungen beim kleinbauenden Untersetzungsgetriebe 22 zwischen Motor 23 und Spindel 20 vermieden, indem Biegebeanspruchungen der Spindel 20 von einer achsparallel in oder neben ihr angeordneten Säule 34 unter präziser, gerätefester Längsführung 35 aufgenommen werden.

### Bezugszeichenliste

- 11: Gurtschlossbringer
- 12: Gehäuse (von 11)
- 13: (untere) Schmalseite (von 12)
- 14: Anschraubauge (in 13)
- 15: (obere) Schmalseite (von 12)
- 16: Haltestange (als Teil von 20, aus 15/44 hervorragend)
- 17: Stirnende (von 16-20)
- 18: Anschraubplatte (bei 17)
- 19: Gurtschloss (an 18)
- 20: Spindel (mit 16)
- 21: Spindelmutter (auf 20; in 12 axial festgelegt); 21.1 Triebmutter, 21.2 Stützmutter
- 22: Untersetzungsgetriebe (zwischen 23 und 21)
- 23: Motor (für Axialbewegung von 20)
- 24: Motorritzel (zum Eingriff in 25)
- 25: Triebrad (von 22, zwischen 23 und 21)
- 26: Radritzel (von 25)
- 27: Zwischenrad (von 26 nach 28)
- 28: Außenverzahnung (von 21)
- 29: Innenmantelfläche (gegebenenfalls von 25)
- 30: Trieb-Welle (von 25-26)
- 31: Zwischenrad-Welle (von 27)
- 32: Lagerblock (in 12, für 23, 22 und 35)
- 33: Unterschale (von 32)
- 34: Säule (parallel zu 20 mit 20 längsverschiebbar; oder gerätefest in 20)
- 35: Längsführung (in 32 für 34; oder zwischen 40/41)
- 36: Ausleger (von 17 nach 20)
- 37: Säulenende (mit 36)
- 38: Stütznase (an 36, zum Eingriff in 39)
- 39: Schiene (längs 12/20 mit 38 verschiebbar)
- 40: Außenmantelfläche (von 34 in 20)
- 41: Innenmantelfläche (von 20)
- 42: Lagersitz (von 21, 21.2)
- 43: Distanzstück (zwischen 21, 21.2 und 44)
- 44: Wand (von 12)
- 45: Gewinde (in 21)
- 46: (axialer) Abstand (der Gewinde 45 in der Stützmutter 21.2)

## Patentansprüche

1. Gurtschlossbringer (11) mit einem Gehäuse (12) zu Aufnahme eines Untersetzungsgetriebes (22) und einer davon antreibbaren, axial festgelegten Spindelmutter (21) auf einer Spindel (20) für Linearbewegungen eines Gurtschlosses (19), **dadurch gekennzeichnet, dass** in dem Gehäuse (12) auch ein Motor (23) für Axialbewegungen der Spindel (20) angeordnet ist, die durch eine zu ihr achsparallele Säule (34) in oder neben ihr biegesteif abgestützt ist.

2. Gurtschlossbringer (11) nach Anspruch 1, **dadurch gekennzeichnet, dass** die Spindel (20) durch eine zu ihr parallel versetzt durch eine gerätefeste Längsführung (35) verlaufende Säule (34) abgestützt ist, mit der sie über einen vorkragenden Ausleger (36) in Wirkverbindung steht.

3. Gurtschlossbringer nach dem vorangehenden Anspruch, **dadurch gekennzeichnet, dass** der Ausleger (36) an einer Schiene (39) befestigt ist, die mit der Axialbewegung der Spindel (20) längs der von der Säule (34) abgelegenen Gehäuseseite verschiebbar gelagert ist.

4. Gurtschlossbringer nach einem der vorangehenden Ansprüche, **dadurch gekennzeichnet, dass** ein Motorritzel (24) mit einer Verzahnung an der Innenmantelfläche eines topfförmig-hohlen Triebrades (25) in Eingriff steht.

5. Gurtschlossbringer nach dem vorangehenden Anspruch, **dadurch gekennzeichnet, dass** das Triebrad (25) samt Radritzel (26) fliegend gelagert ist.

6. Gurtschlossbringer nach einem der vorangehenden Ansprüche, **dadurch gekennzeichnet, dass** beim Untersetzungsgetriebe (20) das Radritzel (26) des Triebrades (25), direkt oder über wenigstens ein Zwischenrad (27), mit einer Außenverzahnung (28) auf der Spindelmutter (21), für die Axialverlagerung der Spindel (20) samt der oder längs der Säule (34), in Eingriff steht.

7. Gurtschlossbringer nach einem der vorangehenden Ansprüche, **dadurch gekennzeichnet, dass** ein mit Motor (23), Untersetzungsgetriebe (22), Spindel (20) und Säule (34) bestückter Lagerblock (32) auf Gurtschloss-Zug abgestützt in das Gehäuse (12) eingesetzt ist.

8. Gurtschlossbringer nach dem vorangehenden Anspruch, **dadurch gekennzeichnet, dass** ein mehrschaliger Lagerblock (32) mit zunächst durch Einlegen zu bestückender Unterschale (33) vorgesehen ist.

9. Gurtschlossbringer nach dem vor-vorangehenden Anspruch, **dadurch gekennzeichnet, dass** ein einteiliger Lagerblock (32) mit seitlichen Öffnungen zu zentripetalem Einschieben des Motors (23) samt seinem Motorritzel (24) und der Getrieberäder samt der Spindelmutter (21) sowie für axiales Einführen der Rad-Wellen (30, 31) und der Säule (34) einschließlich Einschraubens der Spindel (20) vorgesehen ist.

10. Gurtschlossbringer nach einem der vorangehenden Ansprüche, **dadurch gekennzeichnet, dass** die Spindelmutter (21) eine mit der Spindel (20) formschlüssig in Eingriff stehende Kunststoff-Triebmutter (21.1) und eine axial versetzt damit verbundene Metall-Stützmutter (21.2) aufweist, welche infolge größeren Gewinde-Abstandes (46) nicht trägt.

## Claims

1. Belt buckle feeder (11) having a housing (12) for accommodating a reduction gear (22) and an axially fixed spindle nut (21), which is able to be driven by said reduction gear, on a spindle (20) for linear movements of a belt buckle (19), **characterized in that** a motor (23) for axial movements of the spindle (20) is also arranged in the housing (12), said spindle (20) being supported in a flexurally rigid manner by a post (34) axially parallel to and in or next to said spindle.

2. Belt buckle feeder (11) according to Claim 1, **characterized in that** the spindle (20) is supported by a post (34) that extends in a manner parallel to said spindle (20) through a longitudinal guide (35), fixed to the device, said spindle (20) being operatively connected to said post (34) via a projecting extension arm (36).

3. Belt buckle feeder according to the preceding claim, **characterized in that** the extension arm (36) is fastened to a rail (39) which is mounted so as to be displaceable with the axial movement of the spindle (20) along the housing side remote from the post (34).

4. Belt buckle feeder according to one of the preceding claims, **characterized in that** a motor pinion (24) is engaged with toothing on the internal lateral face of a driving gear (25) that is hollow in a cup-like manner.

5. Belt buckle feeder according to the preceding claim, **characterized in that** the driving gear (25) together with the pinion (26) is mounted in an overhung manner.

6. Belt buckle feeder according to one of the preceding claims, **characterized in that** at the reduction gear (20), the pinion (26) of the driving gear (25) is engaged, directly or via at least one intermediate gear (27), with external toothing (28) on the spindle nut (21), for the axial displacement of the spindle (20) together with or along the post (34).

7. Belt buckle feeder according to one of the preceding claims, **characterized in that** a bearing block (32) equipped with the motor (23), reduction gear (22), spindle (20) and post (34) is inserted into the housing (12) so as to be supported with respect to belt buckle tension.

8. Belt buckle feeder according to the preceding claim, **characterized in that** a multi-shell bearing block (32) having a lower shell (33) to be equipped initially by insertion is provided.

9. Belt buckle feeder according to the claim before last, **characterized in that** a one-piece bearing block (32) having lateral openings for the centripetal insertion of the motor (23) together with its motor pinion (24) and of the gearwheels together with the spindle nut (21), and for axial insertion of the gearwheel shafts (30, 31) and of the post (34) including the screwing in of the spindle (20) is provided.

10. Belt buckle feeder according to one of the preceding claims, **characterized in that** the spindle nut (21) has a plastics driving nut (21.1) that is engaged in a form-fitting manner with the spindle (20), and a metal supporting nut (21.2) that is connected thereto in an axially offset manner and is not load-bearing on account of a larger thread spacing (46).

## Revendications

1. Approche-élément de ceinture (11) avec un boîtier (12) destiné à contenir un engrenage de réduction (22) et un écrou de broche axialement fixe (21) pouvant être entraîné par celui-ci sur une broche (20) pour des mouvements linéaires d'un élément de ceinture (19), **caractérisé en ce qu'**un moteur (23) est également disposé dans le boîtier (12) pour des mouvements axiaux de la broche (20), qui prend appui de façon rigide en flexion par une colonne (34) parallèle à l'axe de celle-ci dans ou à côté de celle-ci.

2. Approche-élément de ceinture (11) selon la revendication 1, **caractérisé en ce que** la broche (20) prend appui par une colonne (34) s'étendant de façon décalée parallèlement à celle-ci à travers un guidage longitudinal (35) solidaire de l'appareil, avec laquelle elle est en liaison active au moyen d'un bras saillant (36).

3. Approche-élément de ceinture selon la revendication précédente, **caractérisé en ce que** le bras (36) est fixé à un rail (39), qui est monté de façon déplaçable avec le mouvement axial de la broche (20) le long du côté du boîtier éloigné de la colonne (34).

4. Approche-élément de ceinture selon l'une quelconque des revendications précédentes, **caractérisé en ce qu'**un pignon de moteur (24) est en prise avec une denture sur la surface latérale intérieure d'une roue motrice creuse en forme de godet (25).

5. Approche-élément de ceinture selon la revendication précédente, **caractérisé en ce que** la roue motrice (25) avec le pignon de roue (26) est montée en porte-à-faux.

6. Approche-élément de ceinture selon l'une quelconque des revendications précédentes, **caractérisé en ce que** dans l'engrenage de réduction (20) le pignon de roue (26) de la roue motrice (25) est en prise directement ou au moyen d'au moins une roue intermédiaire (27) avec une denture extérieure (28) sur l'écrou de broche (21), pour le déplacement axial de la broche (20) avec ou le long de la colonne (34).

7. Approche-élément de ceinture selon l'une quelconque des revendications précédentes, **caractérisé en ce qu'**un bloc d'appui (32) équipé du moteur (23), de l'engrenage de réduction (22), de la broche (20) et de la colonne (34) et appuyé sur un tirant de l'élément de ceinture est introduit dans le boîtier (12).

8. Approche-élément de ceinture selon la revendication précédente, **caractérisé en ce qu'**il est prévu un bloc d'appui (32) à plusieurs coques avec d'abord une coque inférieure (33) à équiper par insertion.

9. Approche-élément de ceinture selon la revendication précédant la revendication précédente, **caractérisé en ce qu'**il est prévu un bloc d'appui (32) en une seule pièce avec des ouvertures latérales pour l'insertion centripète du moteur (23) avec son pignon de moteur (24) et les roues de l'engrenage avec l'écrou de broche (21) ainsi que pour l'introduction axiale des arbres-roues (30,31) et de la colonne (34) y compris le vissage de la broche (20).

10. Approche-élément de ceinture selon l'une quelconque des revendications précédentes, **caractérisé en ce que** l'écrou de broche (21) présente un écrou d'entraînement en matière plastique (21.1) en prise par emboîtement avec la broche (20) et un écrou de soutien en métal (21.2) assemblé en décalage axial à celui-ci, qui ne porte pas en raison d'une plus grande distance du filet (46).
